# EUROPÄISCHE PATENTSCHRIFT

(11) **EP 1 312 629 B1**
(45) Veröffentlichungstag und Bekanntmachung des Hinweises auf die Patenterteilung: **08.03.2006**
(21) Anmeldenummer: 02025022.1
(22) Anmeldetag: 11.11.2002
(51) Int. Cl.: C08G 18/08, C08G 18/42, C08G 18/80, C09D 175/04

(54) **Beschichtungsmittel**
Coating
Revêtement

(30) Priorität: 19.11.2001 AT 18192001
(43) Veröffentlichungstag der Anmeldung: 21.05.2003
(73) Patentinhaber: Cytec Surface Specialties Austria GmbH, 8402 Werndorf (AT)
(72) Erfinder: Schafheutle, Markus, Dr., 8044 Graz (AT); Kuttler, Ulrike, Dr., 8302 Vasoldsberg (AT); Arzt, Anton, 8430 Tillmitsch (AT); Burkl, Julius, 8053 Graz (AT)
(74) Vertreter: Deckers, Hellmuth Alexander

(56) Entgegenhaltungen:
- EP-A- 1 110 987
- EP-A- 1 116 758
- US-A- 5 494 956

## Beschreibung

Die Erfindung betrifft ein Beschichtungsmittel, das vor allem zur Herstellung von Beschichtungen auf Automobilteilen geeignet ist. Die so beschichteten Teile, insbesondere solche, bei denen das hier beschriebene Beschichtungsmittel zur Herstellung einer Füllerschicht eingesetzt wird, zeichnen sich durch besonders hohe Steinschlagfestigkeit aus.

In der DE-A 39 18 510 werden konventionelle Einbrennfüller auf Basis von (in organischen Lösungsmitteln gelösten) Polyestern und blockierten Isocyanaten beschrieben.

In der EP-A 0 249 727 werden wäßrige Füller-Beschichtungsmittel auf Basis von Phosphorsäuremodifizierten Epoxidharzen, wasserverdünnbaren Polyestern wie aus der AT-B 328 587 bekannt, und wasserverdünnbaren Melaminharzen beschrieben. Die DE-A 40 00 748 betrifft wäßrige Füller-Beschichtungsmittel aus wasserverdünnbaren Hydroxylgruppen-haltigen Polyurethanharzen, die gegebenenfalls noch andere Bindemittel zugemischt enthalten können, und wäßrigen Aminharzen als Härter. Mischungen aus wasserverdünnbaren Polyurethanharzen, wasserverdünnbaren, mit Epoxidharz modifizierten Polyestern und gegebenenfalls wasserverdünnbaren Aminoplastharzen sind aus der DE-A 38 13 866 bekannt. Andere wäßrige Füller-Beschichtungsmittel auf Basis von Carboxylgruppen-haltigen Polyestern oder Acrylcopolymerisaten und wasserlöslichen blockierten Isocyanat-Präpolymeren, gegebenenfalls in Kombination mit wasserverdünnbaren Aminharzen werden in der DE-A 38 05 629 beschrieben. In der EP 0 594 685 wird die Verwendung von Kondensationsprodukten von Carboxylgruppen-haltigen Polyurethanharzen und Hydroxylgruppen-haltigen, gegebenenfalls urethanmodifizierten Polyesterharzen gemeinsam mit wasserunlöslichen blockierten Isocyanaten zur Herstellung von Einbrennlacken beschrieben. Eine Verbesserung dieser Formulierung mit geringerer Empfindlichkeit gegen das sog. Überbrennen ist aus der EP-A 0 548 873 bekannt, wobei die Verbesserung durch Zusatz eines wasserlöslichen Aminharzes als Vernetzer erreicht wird.

Weiter verbesserte Systeme für wäßrige Füller sind beispielsweise in den Anmeldungen AT 2171 /99, AT 2172/99 und AT 2173/99 beschrieben. Diese Bindemittel sind zwar insbesondere bezüglich des Feststoffgehalts und auch in der Steinschlagfestigkeit verbessert, es zeigen sich jedoch noch Schwächen. Daher ist offensichtlich noch eine weitere Optimierung der gehärteten Lackschicht bezüglich ihrer Elastizität und Festigkeit erforderlich.

Die Aufgabe der Erfindung ist daher, wäßrige Bindemittel für Füllerlacke, die bei der Automobil-Serienfertigung eingesetzt werden, weiter bezüglich der Steinschlagfestigkeit zu verbessern.

Es wurde nun gefunden, daß durch Zusatz einer wäßrigen Dispersion eines besonders hochmolekularen Polyurethans zu Kondensationsprodukten von Hydroxylgruppen-haltigen und Carboxylgruppen-haltigen Harzen, und Kombination dieser Mischung mit Härtern, die beim Erwärmen wirksam werden, wäßrige Beschichtungsmittel zugänglich werden, die gegenüber den bekannten Systemen nach dem Einbrennen verbesserte Steinschlagfestigkeit aufweisen.

Gegenstand der Erfindung ist daher ein Beschichtungsmittel, enthaltend
- ein Kondensationsprodukt A aus einem Carboxylgruppen aufweisenden Harz A1 und einem Hydroxylgruppen aufweisenden Harz A2, wobei bevorzugt A1 eine Säurezahl von 100 bis 230 mg/g, insbesondere von 120 bis 160 mg/g, und A2 bevorzugt eine Hydroxylzahl von -50 bis 500 mg/g, insbesondere von 60 bis 350 mg/g, aufweist,
- ein wasserlösliches oder wasserdispergierbares hochmolekulares Polyurethan B mit einer zahlenmittleren molaren Masse Mₙ (gemessen durch Gelpermeationschromatographie, Eichung mit Polystyrol-Standards) von mindestens 10 kg/mol, bevorzugt mindestens 15, und besonders bevorzugt mindestens 20 kg/mol, und einer gewichtsmittleren molaren Masse M_{w} von mindestens 20 kg/mol, bevorzugt mindestens 30, und besonders bevorzugt mindestens 40 kg/mol, wobei die Säurezahl der Polyurethane B 20 bis 50 mg/g, bevorzugt 25 bis 45 mg/g, beträgt und
- einen erst bei erhöhter Temperatur von mindestens 80 °C wirksam werdenden Härter C.

Es wurde weiter gefunden, daß das genannte hochmolekulare Polyurethan auch als alleiniges Bindemittel zur Formulierung von Füllern verwendet werden kann. Ein weiterer Gegenstand der Erfindung ist daher die Verwendung des Polyurethans B zur Formulierung von Füllerlacken und auch Füllerlacke, die das PolyurethanB als alleiniges Bindemittel oder in einer Kombination enthalten, in dem das Bindemittel mindestens einen Massenanteil von 80 % des Polyurethans **B** aufweist.

Die Säurezahl ist gemäß DIN 53 402 definiert als der Quotient derjenigen Masse *m*_{KOH} an Kaliumhydroxid, die erforderlich ist, um eine zu untersuchende Probe zu neutralisieren, und der Masse *m*_{B} dieser Probe (Masse des Feststoffes in der Probe bei Lösungen oder Dispersionen); ihre übliche Einheit ist "mg/g". Die Hydroxylzahl ist gemäß DIN 53 240 definiert als der Quotient derjenigen Masse *m*_{KOH} an Kaliumhydroxid, die genausoviel Hydroxylgruppen aufweist wie eine zu untersuchende Probe, und der Masse *m*_{B} dieser Probe (Masse des Feststoffes in der Probe bei Lösungen oder Dispersionen); ihre übliche Einheit ist "mg/g".

Das Polyurethanharz enthält Bausteine abgeleitet von Polyisocyanaten **BA,** Polyolen **BB** mit einer zahlenmittleren molaren Masse Mₙ von mindestens 400 g/mol, gegebenenfalls niedermolekularen Polyolen **BC** mit Mₙ unter 400 g/mol, Verbindungen **BD,** die mindestens zwei gegenüber Isocyanatgruppen reaktive Gruppen und mindestens eine zur Anionenbildung befähigte Gruppe aufweisen, niedermolekularen Polyolen **BE,** die gegenüber Isocyanatgruppen keine weiteren reaktiven Gruppen tragen, Verbindungen **BF,** die gegenüber Isocyanaten monofunktionell sind oder aktiven Wasserstoff unterschiedlicher Reaktivität enthalten und von den Verbindungen **BE** verschieden sind, sowie gegebenenfalls Verbindungen **BG,** die von **BB, BC, BD, BE** und **BF** verschieden sind und mindestens zwei mit NCO-Gruppen reaktive Gruppen enthalten.

Der Staudinger-Index des Polyurethanharzes **B,** gemessen in N-Methylpyrrolidon/Chloroform als Lösungsmittel beträgt mindestens 20 cm³/g, bevorzugt mindestens 22 cm³/g und insbesondere mindestens 24 cm³/g. Die früher so bezeichnete "Grenzviskositätszahl", nach DIN 1342, Teil 2.4, "Staudinger-Index" *J*_{g} genannt, ist der Grenzwert der Staudinger-Funktion *J*ᵥ bei abnehmender Konzentration und Schubspannung, wobei *J*ᵥ die auf die Massenkonzentration *β*_{B} *= m*_{B} / *V*des gelösten Stoffes B (mit der Masse m des Stoffes im Volumen V der Lösung) bezogene relative Viskositätsänderung ist, also *J*ᵥ = (ηᵣ - 1 ) / β_{B}. Dabei bedeutet *η*ᵣ - 1 die relative Viskositätsänderung, gemäß *η* ᵣ - 1*= (η - η*ₛ) / *η*ₛ. Die relative Viskosität *η*_{*r*} ist der Quotient aus der Viskosität *η* der untersuchten Lösung und der Viskosität *η*_{*s*} des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für *J* verwendete Einheit ist "cm³g"; häufig auch "dl/g".

Das Kondensationsprodukt A hat bevorzugt eine Säurezahl von 25 bis 75 mg/g, insbesondere 30 bis 50 mg/g. Sein Staudinger- Index ("Grenzviskositätszahl") beträgt üblicherweise 10 bis 20 cm³/g, insbesondere 12 bis 19 cm³/g, und besonders bevorzugt 13 bis 18 cm³/g. Zu seiner Herstellung werden die Komponenten **A1** und **A2** bevorzugt in einem Massenverhältnis von 10 zu 90 bis 80 zu 20, insbesondere von 15 zu 85 bis 40 zu 60, eingesetzt.

Die Harze **A1** mit Carboxylgruppen werden bevorzugt ausgewählt aus Polyesterharzen A11, Polyurethanharzen **A12,** den sogenannten Maleinatölen **A13,** mit ungesättigten Carbonsäuren gepfropften Fettsäuren und Fettsäuregemischen **A14** sowie den Acrylatharzen **A15.** Bevorzugt ist die Säurezahl der Harze **A1 100** bis 230 mg/g, insbesondere von 70 bis 160 mg/g. Ihr Staudinger-Index, gemessen in Dimethylformamid als Lösungsmittel bei 20 ?C, beträgt im allgemeinen ca. 6,5 bis 12 cm³/g, bevorzugt 8 bis 11 cm³/g.

Geeignete Polyesterharze **A11** lassen sich in bekannter Weise herstellen aus Polyolen **A111** und Polycarbonsäuren **A112,** wobei ein Teil, bevorzugt bis zu 25 %, der Stoffmenge der Polyole und Polycarbonsäuren auch durch Hydroxycarbonsäuren **A113** ersetzt sein kann. Durch geeignete Wahl von Art und Menge der Edukte **A111** und **A112** wird sichergestellt, daß der resultierende Polyester eine ausreichende Zahl von Säuregruppen, entsprechend der oben angegebenen Säurezahl, hat. Die Polyole **A111** werden bevorzugt ausgewählt aus den aliphatischen und cycloaliphatischen Alkoholen mit 2 bis 10 Kohlenstoffatomen und im Mittel mindestens zwei Hydroxylgruppen pro Molekül, insbesondere geeignet sind Glykol, 1,2- und 1,3-Propandiol, 1,4-Butandiol, 1,6-Hexandiol, Neopentylglykol, Di- und Triäthylenglykol, Di- und Tripropylenglykol, Glycerin, Trimethylolpropan und Trimethyloläthan. Geeignete Polycarbonsäuren **A112** sind aliphatische, cycloaliphatische und aromatische Polycarbonsäuren wie Adipinsäure, Bernsteinsäure, Cyclohexandicarbonsäure, Phthalsäure, Iso- und Terephthalsäure, Trimellithsäure und Trimesinsäure, Benzophenontetracarbonsäure. Dabei lassen sich auch Verbindungen einsetzen, die sowohl Carbonsäure- als auch Sulfonsäuregruppen aufweisen, wie zum Beispiel Sulfoisophthalsäure.

Geeignete Polyurethanharze **A12** lassen sich darstellen durch Umsetzung von aliphatischen Polyolen **A121** wie unter **A111** definiert, Hydroxyalkancarbonsäuren **A122** mit mindestens einer, bevorzugt zwei, Hydroxylgruppen und einer unter Veresterungsbedingungen im Vergleich zu Adipinsäure weniger reaktiven Carboxylgruppe, bevorzugt eingesetzt werden Dihydroxymonocarbonsäuren ausgewählt aus Dimethylolessigsäure, Dimethylolbuttersäure und Dimethylolpropionsäure, oligomeren oder polymeren Verbindungen **A125** mit im Mittel mindestens zwei Hydroxylgruppen pro Molekül, die ausgewählt werden können aus Polyätherpolyolen **A1251,** Polyesterpolyolen **A1252,** Polycarbonatpolyolen **A1253,** gesättigten und ungesättigten Dihydroxyaliphaten **A1254,** die durch Oligomerisieren oder Polymerisieren von Dienen mit 4 bis 12 Kohlenstoffatomen, insbesondere Butadien, Isopren und Dimethylbutadien und anschließendes Funktionalisieren in bekannter Weise erhältlich sind, sowie mehrfunktionellen Isocyanaten **A123,** bevorzugt ausgewählt aus aromatischen, cycloaliphatischen sowie linearen und verzweigten aliphatischen difunktionellen Isocyanaten wie Toluylendiisocyanat, Bis(4-isocyanatophenyl)methan, Tetramethylxylylendiisocyanat, Isophorondiisocyänat, Bis(4-isocyanatocyclohexyl)methan, Hexamethylendiisocyanat.und 1,6-Diisocyanato-3,3,5- und -3,5,5-trimethylhexan.

Besonders bevorzugt werden solche Polyurethanharze **A12,** die durch Umsetzung einer Mischung von einem oder mehreren Polyolen **A121** mit einer Hydroxyalkancarbonsäure **A122** und mindestens einem mehrfunktionellen Isocyanat **A123,** das mit Monohydroxyverbindungen **A124** ausgewählt aus Polyalkylenglykol-Monoalkyläthern HO-(R¹-O)ₙ- R², wobei R¹ ein linearer oder verzweigter Alkylenrest mit 2 bis 6, bevorzugt 2 bis 4 Kohlenstoffatomen ist, und R² eine Alkylgruppe mit 1 bis 8, bevorzugt 2 bis 6 Kohlenstoffatomen ist, und Oximen von aliphatischen Ketonen mit 3 bis 9 Kohlenstoffatomen zumindest teilweise, üblicherweise zu mehr als 20 %, bevorzugt zu mehr als 35 %, und insbesondere zu 50 % und mehr blockiert ist, n ist 2 bis 100, bevorzugt 3 bis 60, und insbesondere 4 bis 40. Der Blockierungsgrad wird hier angegeben als Anteil der blockierten Isocyanatgruppen, bezogen auf die in dem Isocyanat **A123** insgesamt vorhandenen (blockierten und unblockierten) Isocyanatgruppen. Es ist weiter bevorzugt, die Polyurethanharze **A21** derart herzustellen, daß eine Mischung eines mehrfunktionellen Isocyanats und eines auf die oben beschriebene Weise blockierten mehrfunktionellen Isocyanats mit der Hydroxyalkancarbonsäure **A122** und den Polyolen **A121** und **A125** umgesetzt werden, wobei die Mischungsverhältnisse so gewählt werden, daß in jedem Molekül des Polyurethans A21 im Mittel eine oder mehr als eine endständige blockierte Isocyanatgruppe vorliegt.

Als "Maleinatöl" **A13** werden Umsetzungsprodukte von (trocknenden) Ölen **A131** und olefinisch ungesättigten Carbonsäuren **A132,** besonders Dicarbonsäuren bezeichnet. Als Öle **A131** werden bevorzugt trocknende und halbtrocknende Öle wie Leinöl, Tallöl, Rapsöl, Sonnenblumenöl und Baumwollsaatöl eingesetzt, mit Jodzahlen von ca. 100 bis ca.180. Die ungesättigten Carbonsäuren **A132** werden so ausgewählt, daß sie unter den üblichen Bedingungen radikalisch (nach Zusatz von Initiatoren oder nach Erwärmen) auf die vorgelegten Öle mit einer Ausbeute (Anteil der nach der Reaktion mit dem Öl verbundenen ungesättigten Carbonsäuren, bezogen auf die zur Reaktion eingesetzte Menge) von über 50 % pfropfen. Besonders geeignet ist Maleinsäure in Form ihres Anhydrids, ferner Tetrahydrophthalsäureanhydrid, Acryl- und Methacrylsäure, sowie Citracon-, Mesacon- und Itaconsäure.

Ebenfalls geeignete Harze **A14** sind mit den unter **A132** genannten ungesättigten Säuren gepfropfte Fettsäuren oder Fettsäuregemische **A141,** wobei die letzteren durch Verseifen von Fetten in technischen Mengen zugänglich sind. Die geeigneten Fettsäuren weisen mindestens eine olefinische Doppelbindung im Molekül auf, beispielhaft werden Ölsäure, Linol- und Linolensäure, Ricinolsäure und Elaidinsäure sowie die genannten technischen Gemische solcher Säuren aufgezählt.

Weitere geeignete Harze **A15** sind die durch Copolymerisation von olefinisch ungesättigten Carbonsäuren **A151** und anderen Vinyl- oder Acryl-Monomeren **A152** zugänglichen sauren Acrylatharze. Die Carbonsäuren sind die bereits unter **A132** genannten, ebenso noch Vinylessigsäure sowie Croton- und Isocrotonsäure und die Halbester von olefinisch ungesättigten Dicarbonsäuren wie z. B. Monomethylmaleinat und -fumarat. Geeignete Monomere **A152** sind die Alkylester von Acrylund Methacrylsäure mit bevorzugt 1 bis 8 Kohlenstoffatomen in der Alkylgruppe, (Meth)Acrylnitril, Hydroxyalkyl(meth)acrylate mit 2 bis 6 Kohlenstoffatomen in der Alkylgruppe, Styrol, Vinyltoluol, sowie Vinylester von aliphatischen linearen und verzweigten Carbonsäuren mit 2 bis 15 Kohlenstoffatomen, insbesondere Vinylacetat und der Vinylester eines Gemisches von verzweigten aliphatischen Carbonsäuren mit im Mittel 9 bis 11 Kohlenstoffatomen. Vorteilhaft ist auch die Copolymerisation der unter **A151** und **A152** genannten Monomeren in Gegenwart von solchen Verbindungen **A153,** die mit den ungesättigten Carbonsäuren unter Addition und Bildung einer Carboxyl- oder Hydroxyl-funktionellen copolymerisierbaren Verbindung reagieren. Derartige Verbindungen sind beispielsweise Lactone **A1531,** die mit den Carbonsäuren **A151** unter Ringöffnung zu einer Carboxyl-funktionellen ungesättigten Verbindung reagieren, und Epoxide **A1532,** insbesondere Glycidylester von in "-Stellung verzweigten gesättigten aliphatischen Säuren mit 5 bis 12 Kohlenstoffatomen wie der Neodecansäure oder der Neopentansäure, die unter Addition mit der Säure **A151** zu einer copolymerisierbaren Verbindung mit einer Hydroxylgruppe reagieren. Dabei sind die Stoffmengen der eingesetzten Verbindungen so zu bemessen, daß die geforderte Säurezahl erreicht wird. Legt man diese Verbindung **A153** vor und führt die Polymerisation so durch, daß diese Verbindung als (alleiniges) Lösungsmittel verwendet wird, so erhält man lösungsmittelfreie Acrylatharze.

Als Hydroxylgruppen-haltige Harze **A2** sind insbesondere Polyester **A21,** Acrylatharze **A22,** Polyurethanharze **A23** sowie Epoxidharze **A24** geeignet. Die Hydroxylzahl der Harze **A2** beträgt im allgemeinen ca. 50 bis 500 mg/g, vorzugsweise ca. 60 bis 350 mg/g, und besonders bevorzugt 70 bis 300 mg/g. Ihr Staudinger-Index, gemessen bei 20 °C in Dimethylformamid als Lösungsmittel, beträgt bevorzugt 8 bis 13 cm³/g, insbesondere 9,5 bis 12 cm³/g.

Die Polyester **A21** werden wie die Komponente **A11** durch Polykondensation hergestellt; lediglich ist hier Art und Menge der Edukte so zu wählen, daß ein Überschuß an Hydroxylgruppen gegenüber den Säuregruppen besteht, wobei das Kondensationsprodukt die oben angegebene Hydroxylzahl aufweisen muß. Dies kann erreicht werden, indem mehrwertige Alkohole mit im Mittel mindestens zwei, bevorzugt 2,1 Hydroxylgruppen pro Molekül, mit Dicarbonsäuren oder einem Gemisch von Poly- und Monocarbonsäuren mit im Mittel maximal zwei, bevorzugt 1,5 bis 1,95 Säuregruppen pro Molekül eingesetzt werden. Eine andere Möglichkeit ist, einen entsprechenden Überschuß an Hydroxylkomponenten (Polyolen) **A211** gegenüber den Säuren **A212** einzusetzen. Die Polyole **A211** und die mehrfunktionellen Säuren **A212,** die in der Polykondensationsreaktion zu den Hydroxylgruppen-haltigen Polyestern **A21** umgesetzt werden, werden aus den gleichen Gruppen wie die Polyole **A111** und die Säuren **A112** ausgewählt. Es ist hier ebenso möglich, einen Teil der Polyole und Säuren durch Hydroxysäuren entsprechend **A113** zu ersetzen. Es wird dabei angestrebt, daß die Säurezahl der Komponente **A2** nicht über 20 mg/g, bevorzugt unter 18 mg/g, liegt. Die Säurezahl läßt sich beispielsweise dadurch herabsetzen, daß der fertig kondensierte Polyester **A21** mit einer geringen Menge einwertiger aliphatischer Alkohole **A114** unter Veresterungsbedingungen nachreagiert wird. Dabei ist die Menge an Alkoholen **A114** so zu bemessen, daß zwar die Säurezahl unter den Grenzwert abgesenkt wird, jedoch der Staudinger-Index nicht über die genannte untere Grenze absinkt. Geeignete aliphatische Alkohole sind beispielsweise n-Hexanol, 2-Äthylhexanol, Isodecylalkohol und Tridecylalkohol.

Die Hydroxylgruppen-haltigen Acrylatharze **A22** sind zugänglich durch üblicherweise radikalisch initiierte Copolymerisation von Hydroxylgruppen-haltigen Acrylmonomeren **A221** mit anderen Vinyl- oder Acrylmonomeren **A222** ohne solche Funktionalität. Beispiele für die Monomeren **A221** sind Ester der Acryl- und Methacrylsäure mit aliphatischen Polyolen, insbesondere Diolen mit 2 bis 10. Kohlenstoffatomen, wie Hydroxyäthyl- und Hydroxypropyl-(meth)acrylat. Beispiele für die Monomeren **A222** sind die Alkylester der (Meth)acrylsäure mit 1 bis 10 Kohlenstoffatomen in der Alkylgruppe wie Methyl-, Äthyl-, n-Butyl- und 2-Äthylhexyl(meth)acrylat, (Meth)Acrylnitril, Styrol, Vinyltoluol, Vinylester von aliphatischen Monocarbonsäuren mit 1 bis 10 Kohlenstoffatomen wie Vinylacetat und Vinylpropionat. Bevorzugt werden auch solche Acrylatharze, die nicht wie üblich in Lösung, sondern in einer Substanzpolymerisation hergestellt werden, wobei eine flüssige cyclische Verbindung (s. oben, **A153)** vorgelegt wird, die als Lösungsmittel bei der Polymerisationsreaktion fungiert, und die durch Ringöffnung bei der Reaktion mit einem der eingesetzten Monomeren eine copolymerisierbare Verbindung bildet. Beispiele für solche Verbindungen sind Glycidylester von in α-Stellung verzweigten aliphatischen Monocarbonsäuren, insbesondere der als Neopentansäure oder Neodecansäure kommerziell erhältlichen Säuren bzw. Säuregemische, weiter Lactone wie ε-Caprolacton oder δ-Valerolacton. Werden diese Glycidylester eingesetzt, so ist es erforderlich, mindestens einen zur Stoffmenge der Epoxidgruppen äquimolaren Anteil an Säuregruppen-haltigen Comonomeren, wie (Meth)Acrylsäure, bei der Polymerisation einzusetzen. Die Lactone können unter Ringöffnung sowohl mit Hydroxylgruppen-haltigen als auch mit Säuregruppen-haltigen Comonomeren eingesetzt werden.

Hydroxylgruppen-haltige Polyurethanharze **A23** sind in bekannter Weise zugänglich durch Addition von oligomeren oder polymeren Polyolen **A231,** ausgewählt aus Polyesterpolyolen, Polyätherpolyolen, Polycarbonatpolyolen und Polyolefinpolyolen, gegebenenfalls niedermolekularen aliphatischen Diolen oder Polyolen **A233** mit 2 bis 12 Kohlenstoffatomen, wie beispielsweise Äthylenglykol, 1,2- und 1,3-Propylenglykol, 1,4-Butandiol, 1,6-Hexandiol, Di- und Tri- Äthylen- bzw. Propylenglykol, Neopentylglykol, Trimethylolpropan, Pentaerythrit, und mehrfunktionellen Isocyanaten **A232,** wobei die letzteren in stöchiometrischem Unterschuß eingesetzt werden, derart daß die Anzahl der Hydroxylgruppen in der Reaktionsmischung größer ist als die der Isocyanatgruppen. Geeignete Polyole sind insbesondere oligomere und polymere Dihydroxyverbindungen mit einer zahlenmittleren molaren Masse Mₙ von ca. 200 bis 10000 g/mol. Durch Polyaddition mit mehrfunktionellen, insbesondere difunktionellen Isocyanaten werden sie bis zu dem angestrebten Wert für den Staudinger-Index von mindestens 8 cm³/g, vorzugsweise mindestens 9,5 cm³/g aufgebaut.

Epoxidharze **A24,** die durch Reaktion von Epichlorhydrin mit aliphatischen oder aromatischen Diolen oder Polyolen, insbesondere Bisphenol A, Bisphenol F, Resorcin, Novolaken oder oligomeren Polyoxyalkylenglykolen mit 2 bis 4, bevorzugt 3 Kohlenstoffatomen in der Alkylengruppe, zugänglich sind, weisen je eingesetztem Epichlorhydrin-Molekül mindestens eine Hydroxylgruppe auf. Anstelle der Reaktion von Epichlorhydrin mit Diolen lassen sich die geeigneten Epoxidharze auch durch die sogenannte Advancement-Reaktion aus Diglycidyläthern von Diolen (wie den oben genannten) oder Diglycidylestern von zweibasigen organischen Säuren mit den genannten Diolen herstellen. Alle bekannten Epoxidharze lassen sich hier einsetzen, soweit sie der Bedingung für die Hydroxylzahl genügen.

Als Härter **C** sind blockierte Isocyanate **C1** verwendbar, die nicht oder nur zu einem untergeordneten Anteil von weniger als 20 % ihrer Masse hydrophil modifiziert sind. Bevorzugt werden blockierte Isocyanate, die in bekannter Weise zugänglich sind aus Diisocyanaten wie Toluylendiisocyanat, Isophorondiisocyanat, Bis(4-isocyanatophenyl)methan, 1,6-Diisocyanatohexan, Tetramethylxylylendiisocyanat sowie den aus diesen gebildeten Allophanaten, Biureten oder Uretdionen, und üblichen Blockierungsmitteln. Dies sind beispielsweise lineare oder verzweigte aliphatische Alkohole mit 3 bis 20 Kohlenstoffatomen, bevorzugt 2-Äthylhexanol; Phenole wie Phenol selbst; Glykol-Monoester, wobei die Glykole monomere oder oligomere Alkylenglykole wie Glykol selbst, 1,2- und 1,3-Propandiol, 1,4-Butandiol, Di- und Triäthylenglykol, Di- und Tripropylenglykol sein können, und die Säure ausgewählt ist aus aliphatischen Monocarbonsäuren mit 1 bis 10 Kohlenstoffatomen, bevorzugt Essigsäure; Glykolmonoäther, wobei die Glykole den oben genannten entsprechen und die Verätherungskomponente ausgewählt ist aus den aliphatischen niederen Alkoholen mit 1 bis 8 Kohlenstoffatomen, bevorzugt Butylglykol; oder Ketoxime von aliphatischen Ketonen mit 3 bis 10 Kohlenstoffatomen, wie beispielsweise Butanonoxim. Besonders bevorzugt ist der Einsatz von 3,5-Dimethylpyrazol als Blockierungsmittel, da es nicht toxisch ist und auch bei Temperaturen von 180°C und darüber nicht vergilbt. Die Blockierungsmittel werden in üblicher Weise so gewählt, daß die Abspaltungstemperatur zwischen 80 und 180 °C liegt. Besonders bevorzugt werden blockierte Isocyanate auf Basis von Isophorondiisocyanat und 1,6-Diisocyanatohexan.

Als weitere Härterkomponente kann ein wasserverdünnbares Aminoplastharz **C2** in einem Massenanteil von bis zu 20 % bezogen auf die Masse der gesamten Härter-Komponente eingesetzt werden. Wird ein hydrophil modifiziertes blockiertes Isocyanat **C11** eingesetzt, so muß die Menge dieses Isocyanats **C11** und des Aminoplastharzes **C2** so bemessen werden, daß die Summe der Massenanteile aller wasserverdünnbaren Härterkomponenten nicht 20 % übersteigt

Das Aminoplastharz **C2** wird bevorzugt in teil- oder vollverätherter Form eingesetzt. Insbesondere geeignet sind Melaminharze wie Hexamethoxymethylmelamin, mit Butanol oder mit Mischungen aus Butanol und Methanol verätherte Typen, sowie die entsprechenden Benzoguanamin-, Caprinoguanamin- oder Acetoguanaminharze, die derartige Guanamine gemeinsam mit Melamin enthalten.

In bevorzugter Weise wird das Polykondensat **A** mit einem Teil des Härters **C** zu einem selbsthärtenden Bindemittel **AC** formuliert, wobei in dieser Ausführungsform das Polykondensat **A** mit einem blockierten Isocyanat **C1** gemischt wird. Das Massenverhältnis von Polykondensat **A** zu Härteranteil **C1** beträgt dann bevorzugt ca. 85:15 bis 55:45, insbesondere 80:20 bis 60:40, und besonders bevorzugt 75:25 bis 65:35, wobei das Verhältnis jeweils auf die Masse der Feststoffe bezogen ist. Zudem enthält der Härter in dieser Ausführungsform einen Anteil an Aminoplastharzen **C2,** wobei die Masse des Aminoplastharzes **C2** zur Masse des Polyurethans **B** in einem Verhältnis von ca. 1:10 bis 1:4 steht.

Bevorzugt werden solche Zusammensetzungen eingesetzt, die die folgenden Massenanteile der Komponenten enthalten:
2 bis 30 % des Polyurethans B, bevorzugt 5 bis 25 %, und besonders bevorzugt 7 bis 23 %,
0,3 bis 6 % des Härters C2, bevorzugt 0,9 bis 4,5 %, und besonders bevorzugt 1,2 bis 4,2 %, und
64 bis 97,7 % des selbsthärtenden Bindemittels **AC**, bevorzugt 70,5 bis 94,1 %, und besonders bevorzugt 72,8 bis 91,8 %.

Besonders hohe Härte und guter Glanz werden erreicht, wenn der Massenanteil des Polyurethans **B** 8 bis 15 % beträgt, der Massenanteil des Härters **C2** 1,4 bis 2,7 % und der Rest der Bindemittelzusammensetzung aus dem selbsthärtenden Bindemittel **AC** besteht.

Die genannten Werte für die Massenanteile bedeuten stets Massenanteile der Festkörper der genannten Stoffe an der Masse des Festkörpers der Mischungen.

Die hydrophilen blockierten Isocyanate **C11,** die in untergeordneter Menge gemeinsam mit den blockierten Isocyanaten **C1** eingesetzt werden können, sind unter anderem aus den folgenden Dokumenten bekannt:

In der EP-A 0 424 697 werden hydrophile blockierte Isocyanate beschrieben, die durch Reaktion aus einem Carboxylgruppen-haltigen Polyätherpolyol, einem Diisocyanat und einem Blockierungsmittel zugänglich sind. Diese Isocyanate werden zur Imprägnierung von Fasern und anschließende Herstellung von flächigen Gebilden hieraus eingesetzt.

In der EP-A 0 524 511 ist ein Verfahren beschrieben, wäßrige Dispersionen von blockierten Isocyanaten herzustellen, indem durch kationische, anionische oder nichtionische Strukturen hydrophilisierte Isocyanate in wäßriger Dispersion mit Blockierungsmitteln umgesetzt werden.

In der EP-A 0 576 952 werden wasserlösliche bzw. wasserdispergierbare Gemische blockierter Isocyanate beschrieben, die erhalten werden durch Umsetzung von Diisocyanaten, einem monofunktionellen Blockierungsmittel für Isocyanate, einer Hydroxycarbonsäure, einer Polyolkomponente bestehend aus einem zwei- bis sechswertigen Alkohol mit einer molaren Masse von 62 bis 182 g/mol, und einer Polyesterdiol-Komponente mit einer molaren Masse von 350 bis 950 g/mol.

In der EP-A 0 012 348 wird ein Verfahren zur Herstellung von wasserdispergierbaren oder wasserlöslichen blockierten Polyisocyanaten beschrieben, wobei ein zumindest zur Hälfte blockiertes mehrfunktionelles Isocyanat mit einem Aminsulfonat oder der entsprechenden Säure umgesetzt wird.

In der EP-A 0 566 953 werden wasserlösliche oder wasserdispergierbare blockierte Polyisocyanate beschrieben, die aus einem Isocyanatgemisch mit einer mittleren Isocyanat-Funktionalität von 2,5 bis 3,5, einem Blockierungsmittel und einer aliphatischen Monohydroxycarbonsäure herstellbar sind.

In der DE-A 44 13 059 sind wasserlösliche blockierte Polyisocyanate beschrieben, die eingebaute Aminogruppen enthalten, die durch Neutralisation mit Säuren in Ammoniumsalzgruppen überführbar sind und so das Vernetzungsmittel hydrophil machen.

In der EP-A 0 486 881 wird ein wasserverdünnbares mehrfunktionelles Polyisocyanat beschrieben, das freie Isocyanatgruppen aufweist. Durch die Gegenwart dieser Gruppen wird die Lagerstabilität solcher Beschichtungsmittel herabgesetzt, die diese Vernetzungsmittel enthalten.

Gemäß der Lehre dieser Dokumente werden die hydrophil modifizierten (d. i. wasserlöslichen oder wasserdispergierbaren) blockierten Isocyanate erhalten durch Umsetzung von teilblockierten mehrfunktionellen Isocyanaten mit hydrophilisierenden Verbindungen bis zum vollständigen oder nahezu vollständigen Verbrach der Isocyanatgruppen. Diese hydrophilisierenden Verbindungen werden ausgewählt aus anionogenen Verbindungen wie organischen Carbon-, Sulfon- oder Phosphonsäuren, die mindestens eine gegenüber Isocyanaten reaktive Gruppe enthalten, ausgewählt bevorzugt aus Hydroxyl-, Amino-, Hydrazin- und Mercaptogruppen, insbesondere Bishydroxyalkylcarbonsäuren wie die Dimethylolpropionsäure, wobei deren Reaktionsprodukte mit Isocyanaten durch Zusatz von Alkalien in die entsprechenden Anionen überführt werden können, sowie aus kationogenen Verbindungen, insbesondere organischen Aminen, die mindestens eine tertiäre Aminogruppe sowie mindestens eine der oben genannten gegenüber Isocyanaten reaktiven

Gruppen enthalten, wobei die tertiäre Aminogruppe nach der Umsetzung mit dem Isocyanat durch Zusatz von Säuren in das entsprechende Ammonium-Kation überführt werden kann. Die dritte Möglichkeit der Hydrophilisierung ist die Umsetzung der teilblockierten Isocyanate mit nichtionischen hydrophilen Verbindungen, insbesondere solchen mit einem ausreichenden Anteil von Oxyäthylen-Gruppen, die auch bekanntermaßen gemeinsam mit Oxypropylengruppen in der betreffenden Verbindung vorliegen können.

Die Harze **A** werden aus den Polyhydroxy-Komponenten **A2** und den Polycarboxyl-Komponenten **A2** unter Kondensationsbedingungen hergestellt, d. h. bei einer Temperatur von 80 bis 180 °C, bevorzugt zwischen 90 und 170 °C, vorzugsweise in Gegenwart von solchen Lösungsmitteln, die mit dem bei der Kondensation gebildeten Wasser Azeotrope bilden. Die Kondensation wird soweit geführt, daß die Harze **A** Säurezahlen von ca. 25 bis ca. 75 mg/g aufweisen, der Staudinger-Index beträgt dann ca. 13,5 bis 18 cm³/g, bevorzugt 14,5 bis 16,5 cm³/g, jeweils gemessen in Dimethylformamid als Lösungsmittel bei 20 °C. Nach zumindest teilweiser Neutralisation der verbliebenen Carboxylgruppen (wobei vorzugsweise 10 bis 80 % der Carboxylgruppen, besonders bevorzugt 25 bis 70 % neutralisiert werden) sind die Harze A in Wasser dispergierbar. Während der Kondensation kann man beobachten, daß die anfänglich trübe Reaktionsmasse sich klärt und eine homogene Phase bildet.

Die Polyurethanharze **B** lassen sich durch die folgenden Schritte darstellen:
- Synthese eines Isocyanat-funktionellen Präpolymeren durch Umsetzung von Polyisocyanaten **BA** mit Polyolen **BB** mit einer zahlenmittleren molaren Masse Mₙ von mindestens 400 g/mol, gegebenenfalls niedermolekularen Polyolen **BC** und Verbindungen **BD,** die mindestens zwei gegenüber Isocyanatgruppen reaktive Gruppen und mindestens eine zur Anionenbildung befähigte Gruppe aufweisen, zu einem freie NCO-Gruppen enthaltenden Präpolymeren, das einen Staudinger-Index *J*₀ von mindestens 15 cm³/g, bevorzugt mindestens 17 cm³/g, und besonders bevorzugt mindestens 19 cm³/g aufweist,
- zumindest teilweise Neutralisation der zur Anionenbildung befähigten Gruppe der Verbindung **BD** unter Bildung von anionischen Gruppen, Dispergierung dieses Präpolymeren in Wasser und
- Umsetzung des neutralisierten Präpolymeren mit mindestens einer der Komponenten ausgewählt aus niedermolekularen Polyolen **BE,** die gegenüber Isocyanatgruppen keine weiteren reaktiven Gruppen tragen, wobei diese Verbindungen im Überschuß eingesetzt werden, Verbindungen **BF,** die gegenüber Isocyanaten monofunktionell sind oder aktiven Wasserstoff unterschiedlicher Reaktivität enthalten und von den Verbindungen **BE** verschieden sind, sowie gegebenenfalls Verbindungen **BG,** die von **BB, BC, BD, BE** und **BF** verschieden sind und mindestens zwei mit NCO-Gruppen reaktive Gruppen enthalten.

Die Isocyanate **BA** sind mindestens difunktionell und können ausgewählt werden aus aromatischen und aliphatischen linearen, ryclischen oder verzweigten Isocyanaten, insbesondere Diisocyanaten. Werden aromatische Isocyanate eingesetzt, so müssen diese in Mischung mit den genannten aliphatischen Isocyanaten verwendet werden. Dabei ist der Anteil der aromatischen Isocyanate so zu wählen, daß die Anzahl der durch diese in die Mischung eingeführten Isocyanatgruppen zumindest 5 % geringer ist als die Anzahl der nach der ersten Stufe verbleibenden Isocyanatgruppen in dem erzeugten Präpolymer. Bevorzugt werden Diisocyanate, wobei bis zu 5 % von deren Masse durch trifunktionelle oder höherfunktionelle Isocyanate ersetzt werden kann.

Die Diisocyanate besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat, IPDI), 4,4'-Diisocyanatodicyclohexylmethan, 4,4'-Diisocyanatodicyclohexylpropan-(2,2),1,4-Diisoryanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und α, α, α, α-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-A 29 28 552 verwiesen.

Geeignet sind auch "Lackpolyisocyanate" auf Basis von Hexamethylendiisocyanat oder von 1-Isocyanato-3,3,5-trimethyl-4-isocyanatomethyl-cyclohexan (IPDI) und/oder Bis-(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen restlichen Massenanteil von weniger als 0,5 % befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-A 4 324 879 erhalten werden können, und die im wesentlichen auf N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphanen als Katalysator entstehen. Besonders bevorzugt sind die zuletzt genannten Gemische einer Viskosität bei 23 °C von 50 bis 20 000 mPa·s und einer zwischen 2,0 und 5,0 liegenden NCO-Funktionalität.

Bei den erfindungsgemäß ebenfalls geeigneten, jedoch bevorzugt in Mischung mit den vorgenannten aliphatischen Polyisocyanaten einzusetzenden aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die eventuell im Anschluß an ihre Herstellung vorzugsweise destillativ von überschüssigen monomeren Diisocyanaten befreit worden sind. In den Mischungen von aromatischen und (cyclo-)aliphatischen Isocyanaten werden die Mengen dieser beiden Komponenten so gewählt, daß sichergestellt ist, daß die Isocyanatgruppen des Präpolymeren ausschließlich oder mindestens zu 90 % (cyclo-) aliphatisch gebunden sind.

Die Polyisocyanatkomponente **BA** kann im übrigen aus beliebigen Gemischen der beispielhaft genannten Polyisocyanate bestehen.

Der Massenanteil an von den Polyisocyanaten **BA** abgeleiteten Bausteinen in dem Polyurethanharz liegt in der Regel bei ca. 10 bis 50 %, vorzugsweise 20 bis 35 %, bezogen auf die Masse des Polyurethanharzes.

Die Polyole **BB** besitzen vorzugsweise eine zahlenmittlere molare Masse Mₙ von 400 bis 5000 g/mol, insbesondere 800 bis 2000 g/moL Ihre Hydroxylzahl beträgt im allgemeinen 30 bis 280, vorzugsweise 50 bis 200 und insbesondere 70 bis 160 mg/g. Bevorzugt werden ausschließlich difunktionelle Polyole **B** eingesetzt; bis zu 5 % der Masse der Polyole **B** kann jedoch auch durch drei- oder höherwertige Polyole ersetzt werden.

Beispiele für derartige Polyole, bei denen es sich um die aus der Polyurethanchemie bekannten Verbindungen handelt, sind Polyätherpolyole, Polyesterpolyole, Polycarbonatpolyole, Polyesteramidpolyole, Polyamidoamidpolyole, Epoxidharzpolyole und deren Umsetzungsprodukte mit CO₂, Polyacrylatpolyole und dergleichen. Derartige Polyole, die auch in Mischung eingesetzt werden können, sind beispielsweise in den DE-Offenlegungsschriften 20 20 905, 23 14 513 und 31 24 784 sowie in der EP-A 0 120 466 beschrieben. Es ist gleichfalls möglich, Ricinusöl als Polyolkomponente einzusetzen.

Von diesen Polyolen sind die Polyäther- und Polyesterpolyole bevorzugt, insbesondere solche, die nur endständige OH-Gruppen aufweisen und eine Funktionalität von kleiner als 3, vorzugsweise von 2,8 bis 2 und insbesondere von 2 besitzen.

Als Polyätherpolyole sind hier beispielsweise Polyoxyäthylenpolyole, Polyoxypropylenpolyole, Polyoxybutylenpolyole zu nennen und vorzugsweise Polytetrahydrofurane mit endständigen OH-Gruppen.

Die erfindungsgemäß besonders bevorzugten Polyesterpolyole sind die bekannten Polykondensate aus organischen Di- sowie gegebenenfalls Poly- (Tri-, Tetra-) Hydroxyverbindungen und Di- sowie gegebenenfalls Poly- (Tri-, Tetra-) Carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Äthylenglykol, 1,2-Butandiol, Diäthylenglykol, Triäthylenglykol, Polyalkylenglykole, wie Polyäthylenglykol, weiterhin 1,2- und 1,3-Propandiol, 1,4-Butandiol, 1,6-Hexandiol, Neopentylglykol oder Hydroxypivalinsäureneopentylglykolester. Als gegebenenfalls mit einzusetzende Polyole mit drei oder mehr Hydroxylgruppen im Molekül sind hier beispielsweise Trimethylolpropan, Trimethyloläthan, Glycerin, Erythrit, Pentaerythrit, Ditrimethylolpropan, Dipentaerythrit, Trimethylolbenzol oder Trishydroxyäthylisocyanurat zu nennen.

Als Dicarbonsäuren geeignet sind aromatische und cycloaliphatische Dicarbonsäuren, lineare und verzweigte Alkyl- und Alkenyl-Dicarbonsäuren sowie Dimerfettsäuren. Es kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Bernsteinsäure, Azelainsäure, Sebacinsäure, Glutarsäure, "Chlorendic"-Säure, Tetrachlorphthalsäure, Maleinsäure, Fumarsäure, Itaconsäure, Malonsäure, Korksäure, 2-Methylbernsteinsäure, 3,3-Diäthylglutarsäure, 2,2-Dimethylbernsteinsäure, Octenylbernsteinsäure und Dodecenylbernsteinsäure. Anhydride dieser Säuren sind ebenfalls brauchbar, soweit sie existieren. Die Anhydride werden hier durch den Ausdruck "Säure" mit umfaßt. Es können auch untergeordnete Mengen (Stoffmengenanteil bis zu 10 %, bezogen auf die Stoffmenge aller Säuren) von Monocarbonsäuren, wie Benzoesäure und Hexancarbonsäure verwendet werden. Gesättigte aliphatische oder aromatische Säuren sind bevorzugt, wie Adipinsäure oder Isophthalsäure. Als gegebenenfalls in kleineren Mengen mitzuverwendende Polycarbonsäuren seien hier Trimellithsäure, Trimesinsäure, Pyromellithsäure sowie Polyanhydride, wie in DE 28 11 913 beschrieben, oder Mischungen zweier oder mehrerer solcher Verbindungen genannt.

Die Hydroxycarbonsäuren, die als Reaktionsteilnehmer bei der Herstellung eines Polyesterpolyols mit endständigen Hydroxylgruppen verwendet werden können, sind beispielsweise Hydroxycapronsäure, Hydroxybuttersäure, Hydroxydecansäure, Hydroxystearinsäure. Brauchbare Lactone, die bei der Synthese der Polyesterpolyole eingesetzt werden können, sind unter anderen Caprolacton, Butyrolacton und Valerolacton.

Der Massenanteil an von der Komponente **BB** abgeleiteten Bausteinen in dem Polyurethanharz liegt üblicherweise zwischen 15 und 80 %, vorzugsweise zwischen 40 und 60 %, bezogen auf die Masse des Polyurethanharzes.

Die gegebenenfalls zum Aufbau der Polyurethanharze eingesetzten niedermolekularen Polyole BC bewirken in der Regel eine Versteifung der Polymerkette. Sie besitzen im allgemeinen eine molare Masse von etwa 60 bis 400 g/mol, vorzugsweise 60 bis 200 g/mol und Hydroxylzahlen von 200 bis 1500 mg/g. Sie können aliphatische, alicyclische oder aromatische Gruppen enthalten. Ihr Massenanteil, soweit sie eingesetzt werden, liegt im allgemeinen bei 0,5 bis 20, vorzugsweise 1 bis 10 %, bezogen auf die Masse der Hydroxylgruppen-haltigen Komponenten **BB** bis **BD.** Geeignet sind beispielsweise die niedermolekularen Polyole mit bis zu etwa 20 Kohlenstoffatomen je Molekül, z.B. Äthylenglykol, Diäthylenglykol, 1,2-Propandiol, 1,3-Propandiol, 1,4-Butandiol, 1,2- und 1,3-Butylenglykol, 1,2- und 1,4-Cyclohexandiol, 1,4-Cyclohexandimethanol, 1,6-Hexandiol, Bisphenol A (2,2-Bis(4-hydroxyphenyl)propan), hydriertes Bisphenol A (2,2-Bis(4-hydroxycyclohexyl)propan) sowie deren Mischungen, sowie als Triole Trimethyloläthan und -propan. Bevorzugt werden ausschließlich oder zumindest überwiegend (in der Regel mehr als 90 % der Masse, bevorzugt mehr als 95 %) Diole eingesetzt.

Werden bei den Verbindungen **BA, BB,** und/oder **BC** trifunktionelle oder höherfunktionelle Verbindungen eingesetzt, so ist darauf zu achten, daß beim Aufbau des Präpolymeren keine Vergelung eintritt, Dies kann beispielsweise dadurch verhindert werden, daß monofunktionelle Verbindungen gemeinsam mit den tri- oder höherfunktionellen Verbindungen eingesetzt werden, wobei die Menge der monofunktionellen Verbindungen dann vorzugsweise so zu wählen ist, daß die mittlere Funktionalität der betreffenden Komponente 2,3, bevorzugt 2,2, und insbesondere 2,1 nicht übersteigt.

Die anionogenen Verbindungen BD enthalten mindestens eine, bevorzugt mindestens zwei mit Isocyanaten reaktive gruppen wie Hydroxyl-, Amino- und Mercaptan-Gruppen und mindestens eine Säuregruppe, die bei zumindest teilweiser Neutralisation in wäßriger Lösung oder Dispersion Anionen bildet. Solche Verbindungen sind beispielsweise in den US-A 34 12 054 und 36 40 924 sowie in den DE-A 26 24 442 und 27 44 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen oder Phosphonsäuregruppen geeignet. Beispiele für Verbindungen **BD** sind insbesondere Dihydroxycarbonsäuren, wie α, α - Dialkylolalkansäuren, insbesondere α,α-Dimethylolalkansäuren wie 2,2-Dimethylolessigsäure, 2,2-Dimethylolpropionsäure, 2,2-Dimethylolbuttersäure, 2,2-Dimethylolpentansäure und die isomeren Weinsäuren, weiterhin Polyhydroxysäuren wie Glukonsäure. Besonders bevorzugt ist dabei 2,2-Dimethylolpropionsäure. Aminogruppenhaltige Verbindungen **BD** sind beispielsweise 2,5-Diaminovaleriansäure (Ornithin) und 2,4-Diaminotoluolsulfonsäure-(5). Es können auch Gemische der genannten Verbindungen **BD** zum Einsatz kommen. Der Massenanteil der von der Komponente **BD** abgeleiteten Bausteine in dem Polyurethanharz liegt im allgemeinen bei 2 bis 20, vorzugsweise bei 4 bis 10 %, bezogen auf die Masse des Polyurethanharzes.

Die Verbindungen **BE** befinden sich überwiegend, vorzugsweise zu 70 bis 90 %, jeweils an den Kettenenden der Moleküle und schließen diese ab (Kettenstopper). Geeignete Polyole besitzen mindestens drei, vorzugsweise 3 oder 4 Hydroxylgruppen im Molekül. Genannt seien hier beispielsweise Glycerin, Hexantriol, Pentaerythrit, Dipentaerythrit, Diglycerin, Trimethyloläthan und Trimethylolpropan, wobei letzteres bevorzugt ist. Als Kettenstopper wird die Komponente **BE** im Überschuß eingesetzt, also in einer solchen Menge, daß die Anzahl der Hydroxylgruppen in der eingesetzten Menge der Komponente **BE** die der noch vorhandenen Isocyanatgruppen im Präpolymeren **BA-BB-BC-BD** übersteigt. Der Massenanteil an von der Komponente **BE** abgeleiteten Bausteine im Polyurethanharz liegt üblicherweise zwischen 2 und 15, vorzugsweise 5 bis 15 %, bezogen auf die Masse des Polyurethanharzes. Gegebenenfalls finden sich die von der Komponente **BE** abgeleiteten Bausteine in Mischung mit den Bausteinen abgeleitet von **BF** und/oder **BG** im Polyurethanharz.

Die Verbindungen **BF** sind monofunktionelle, mit NCO-Gruppen reaktive Verbindungen, wie Monoamine, insbesondere mono-sekundäre Amine, oder Monoalkohole. Genannt seien hier beispielsweise: Methylamin, Äthylamin, n-Propylamin, n-Butylamin, n-Octylamin, Laurylamin, Stearylamin, Isononyloxypropylamin, Dimethylamin, Diäthylamin, Di-n- und Di-isopropylamin, Din-butylamin, N-Methylaminopropylamin, Diäthyl- und Dimethyl-aminopropylamin, Morpholin, Piperidin, bzw. geeignet substituierte Derivate davon, Amidoamine aus diprimären Aminen und Monocarbonsäuren, sowie Monoketimine von diprimären Aminen, und primär/tertiäre Amine, wie N,N-Dimethylaminopropylamin.

Vorzugsweise kommen für **BF** auch Verbindungen in Betracht, die aktiven Wasserstoff mit gegenüber NCO-Gruppen unterschiedlicher Reaktivität enthalten, insbesondere Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren besonders bevorzugt sind. Beispiele hierfür sind: primäre/sekundäre Amine, wie 3-Amino-1-methylaminopropan, 3-Amino-1-äthylaminopropan, 3-Amino-1-cyclohexylaminopropan, 3-Amino-1-methylaminobutan; Mono-Hydroxycarbonsäuren, wie Hydroxyessigsäure, Milchsäure oder Äpfelsäure, weiterhin Alkanolamine wie N-Aminoäthyläthanolamin, Äthanolamin, 3-Aminopropanol, Neopentanolamin und besonders bevorzugt Diäthanolamin. Gegebenenfalls können auch solche Verbindungen BF eingesetzt werden, die außer den gegenüber Isocyanatgruppen reaktiven Gruppen noch olefinische Doppelbindungen enthalten. Die so erhaltenen Polyurethane können nach dem Aufbringen auf ein Substrat durch Einwirkung von energiereicher Strahlung wie UV-Strahlen oder Elektronenstrahlen vernetzt werden.

Auf diese Weise können, ebenso wie der Verwendung der Verbindungen **BE,** zusätzliche funktionelle Gruppen in das polymere Endprodukt eingebracht und dieses damit reaktionsfähiger gegenüber Materialien, wie Härtern, gemacht werden, falls dies gewünscht ist. Der Massenanteil an von der Komponente **BF** abgeleiteten Bausteine in dem Polyurethanharz liegt üblicherweise zwischen 2 und 20, vorzugsweise 3 und 10 %, bezogen auf die Masse des Polyurethanharzes.

Die Verbindungen **BG** sind die sogenannten Kettenverlängerer. Als solche kommen die hierfür bekannten, mit NCO-Gruppen reaktiven und vorzugsweise difunktionellen Verbindungen in Frage, die nicht identisch mit **BB, BC, BD, BE** und **BF** sind und zumeist zahlenmittlere molare Massen bis zu 400 g/mol aufweisen. Genannt seien hier beispielsweise Wasser, Hydrazin, und aliphatische lineare oder verzweigte oder cyclische Diamine wie Äthylendiamin, 1,3-Diaminopropan, 1,4-Diaminobutan, Hexamethylendiamin, wobei die Amine auch Substituenten, wie OH-Gruppen, tragen können. Solche Polyamine sind beispielsweise in der DE-Offenlegungsschrift 36 44 371 beschrieben. Der Massenanteil an von der Komponente **BG** abgeleiteten Bausteine in dem Polyurethanharz liegt üblicherweise zwischen 1 und 10, vorzugsweise 2 und 5 %, bezogen auf die Masse des Polyurethanharzes.

Die Herstellung des erfindungsgemäßen Polyurethanharzes erfolgt bevorzugt in der Weise, daß man aus den Polyisocyanaten **BA,** den Polyolen gemäß **BB** und gegebenenfalls den niedermolekularen Polyolen **BC** sowie den Verbindungen **BD** zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit den Verbindungen **BE** und/oder **BF** gegebenenfalls in Abmischung mit geringen Mengen an Verbindungen **BG,** in einem nicht-wäßrigen System umsetzt, wobei die Komponente **BE** im stöchiometrischen Überschuß (Anzahl der Hydroxylgruppen in **BE** ist größer als die Anzahl der Isocyanatgruppen in dem im ersten Schritt hergestellten Präpolymer) eingesetzt wird, und das vollständig ausreagierte Polyurethanharz vorzugsweise abschließend neutralisiert und ins wäßrige System überführt. Gegebenenfalls kann auch die Umsetzung mit **BG** nach der Überführung ins wäßrige System erfolgen. Das Präpolymer soll dabei bereits hochmolekular sein, bevorzugt weist es einen Staudinger-Index *J*₀ von mindestens 15 cm³/g, bevorzugt mindestens 17 cm³/g und besonders bevorzugt mindestens 19 cm³/g auf.

Die Herstellung des Polyurethan-Präpolymeren im ersten Schritt erfolgt dabei nach den bekannten Verfahren. Hierbei wird das mehrfunktionelle Isocyanat **BA** gegenüber den Polyolen **BB** bis **BD** im Überschuß eingesetzt, so daß ein Produkt mit freien Isocyanatgruppen resultiert. Diese Isocyanatgruppen sind end- und/oder seitenständig, vorzugsweise endständig. Zweckmäßigerweise ist dabei die Menge an Polyisocyanat **BA** so groß, daß das Verhältnis der Anzahl von Isocyanatgruppen in der eingesetzten Menge der Komponente **BA** zur Gesamtzahl der OH-Gruppen in den eingesetzten Polyolen **BB** bis **BD** 1,05 bis 1,4, vorzugsweise 1,1 bis 1,3 beträgt.

Die Umsetzung zur Herstellung des Präpolymeren wird normalerweise bei Temperaturen von 60 bis 95 °C, vorzugsweise 60 bis 75 °C, je nach Reaktivität des eingesetzten Isocyanats, durchgeführt, in der Regel ohne Anwesenheit eines Katalysators, jedoch vorzugsweise in Gegenwart von gegenüber Isocyanaten inaktiven Lösungsmitteln. Hierfür kommen insbesondere solche Lösungsmittel in Betracht, die mit Wasser verträglich sind, wie die weiter unten genannten Äther, Ketone und Ester sowie N-Methylpyrrolidon. Der Massenanteil dieses Lösungsmittels überschreitet zweckmäßigerweise nicht 20 %, und liegt vorzugsweise im Bereich von 5 bis 15 %, jeweils bezogen auf die Summe aus den Massen des Polyurethanharzes und des Lösungsmittels. Zweckmäßigerweise wird dabei das Polyisocyanat der Lösung der übrigen Komponenten zugegeben. Es besteht jedoch ebenfalls die Möglichkeit, zunächst das Polyisocyanat **BA** zu dem Polyol **BB** und gegebenenfalls **BC** zuzugeben und das so erzeugte Präpolymer **BA-BB-BC** mit der Komponente **BD,** die in einem gegenüber Isocyanaten inaktiven Lösungsmittel, vorzugsweise N-Methylpyrrolidon oder Ketone, gelöst ist, zu dem Präpolymer **BA-BB-BC-BD** umzusetzen.

Das Präpolymere **BA-BB-BC-BD** bzw. dessen Lösung wird dann mit Verbindungen gemäß **BE** und/oder **BF,** gegebenenfalls in Abmischung mit **BG,** umgesetzt, wobei die Temperatur zweckmäßigerweise im Bereich von 50 bis 110 °C, vorzugsweise zwischen 70 und 110 °C liegt, bis der NCO-Gehalt in der Reaktionsmischung praktisch auf Null abgesunken ist. Falls die Verbindung **BE** eingesetzt wird, so wird diese im Überschuß (Anzahl der Hydroxylgruppen in **BE** übersteigt die Anzahl der Isocyanatgruppen im Präpolymer **BA-BB-BC-BD)** zugegeben. Die Menge an **BE** liegt dabei zweckmäßigerweise so, daß das Verhältnis der Anzahl von NCO-Gruppen im Präpolymeren bzw. des vorher gegebenenfalls schon mit Verbindungen gemäß **BF** und/oder **BG** umgesetzten Präpolymeren **BA-BB-BC-BD(BF/BG)** zur Anzahl der reaktiven Gruppen von **BE** 1:1,1 bis 1:5, vorzugsweise 1:1,5 bis 1:3 beträgt. Die Masse an **BF** und/oder **BG** kann dabei 0 bis 90 %, vorzugsweise 0 bis 20 %, bezogen auf die Masse von **BE** betragen.

Ein Teil der in dem so hergestellten Polyurethan gebundenen (nicht neutralisierten) Säuregruppen, vorzugsweise 5 bis 30 %, kann gegebenenfalls mit difunktionellen mit Säuregruppen reaktiven Verbindungen, wie Diepoxiden, umgesetzt werden.

Zur Neutralisation des resultierenden, vorzugsweise COOH-Gruppen enthaltenden Polyurethans sind insbesondere tertiäre Amine geeignet, z.B. Trialkylamine mit 1 bis 12, vorzugsweise 1 bis 6 C-Atomen in jedem Alkylrest. Beispiele hierfür sind Trimethylamin, Triäthylamin, Methyldiäthylamin, Tripropylamin. Die Alkylreste können beispielsweise auch Hydroxylgruppen tragen, wie bei den Dialkylmonoalkanol-, Alkyldialkanol- und Trialkanolaminen. Beispiel hierfür ist Dimethyläthanolamin, das bevorzugt als Neutralisationsmittel dient.

Als Neutralisationsmittel sind gegebenenfalls auch anorganische Basen, wie Ammoniak oder Natrium- bzw. Kaliumhydroxid einsetzbar.

Das Neutralisationsmittel wird zumeist in solchen Mengen eingesetzt, daß das Verhältnis der Stoffmenge von Amingruppen bzw. in wäßriger Lösung gebildeten Hydroxylionen zur Stoffmenge der Säuregruppen des Präpolymeren ca. 0,3:1 bis 1,3:1, vorzugsweise ca. 0,5:1 bis 1:1 beträgt.

Die Neutralisation, die in der Regel zwischen Raumtemperatur und 110°C erfolgt, kann in beliebiger Weise durchgeführt werden, z.B. so, daß das wasserhaltige Neutralisationsmittel dem Polyurethanharz zugegeben wird oder umgekehrt. Es ist aber auch möglich, daß man zuerst das Neutralisationsmittel dem Polyurethanharz zufügt und danach erst das Wasser. Im allgemeinen erhält man so einen Festkörper-Massenanteil in der Dispersion von 20 bis 70 %, bevorzugt 30 bis 50%.

Die fertig formulierte Dispersion kann noch durch übliche Zusätze wie Pigmente, Korrosionsschutzmittel, Verlaufsmittel, Antiabsetzmittel, Haftverbesserer und Entschäumer dem vorgesehenen Anwendungszweck angepaßt werden. Zur Formulierung von Füllern werden der Dispersion weiter organische oder anorganische Füllstoffe zugesetzt, wie Ruß, Titandioxid, feinteilige Kieselsäure, Silikate wie Kaolin oder Talkum, Kreiden, Schwerspat oder EisenoxidPigmente; als organische Füllstoffe lassen sich gemahlene Thermoplasten wie Polyolefine, Polyester oder Polyamid einsetzen; bevorzugt sind auch durch Emulsionspolymerisation zugängliche, besonders auch vernetzte Polymerisate aus olefinisch ungesättigten Monomeren. Die Füllerzusammensetzungen können ferner die üblichen Lösungsmittel, insbesondere wassermischbare Lösungsmittel, enthalten. Die Herstellung dieser Füller erfolgt üblicherweise durch Vermahlen der Füllstoffe und Pigmente mit einem Teil der Dispersion unter Zusatz von Dispergierhilfsmitteln, Entschäumern und anderer Additive in geeigneten Dispergieraggregaten wie einer Perlmühle. Dabei wird die Teilchengröße der Füllstoffe und Pigmente bevorzugt auf unter 15 µm vermindert. Zu dieser Zubereitung wird anschließend der Rest der Dispersion sowie gegebenenfalls weitere Additive entsprechend dem angestrebten Pigment-Bindemittel-MassenVerhältnis von 0,5:1 bis zu 2,5:1 zugesetzt. In der Masse der Pigmente wird hier auch die Masse der Füllstoffe einbezogen.

Die fertige Zubereitung kann durch die üblichen Verfahren, wie Rollen, Spritzen oder Walzen auf das Substrat aufgetragen werden. Besonders bevorzugt werden Spritzauftragstechniken, wie Druckluft-Spritzen, Airless-Spritzen oder das sogenannte "ESTA-Hochrotationsspritzen". Nach einer kurzen Ablüftzeit bei Raumtemperatur oder erhöhter Temperatur bis zu ca. 80 °C wird die Schicht bei ca. 130 bis ca. 190 °C eingebrannt. Die Schichtdicke nach dem Einbrennen beträgt üblicherweise ca. 15 bis ca. 120 µm, bevorzugt zwischen 25 und 70 µm.

Der Zusatz des hochmolekularen Polyurethans **B** bewirkt in der eingebrannten Schicht einen deutlich verbesserten Kennwert für den Steinschlag. Es ist auch möglich, das Polyurethan **B** als einziges Bindemittel für einen Füllerzusammensetzung, in Kombination mit den erforderlichen Menge an Härter **C**, einzusetzen. Während bereits durch Zusatz von relativ geringen Mengen der Steinschlag-Kennwert von derart modifizierten Füller-Zusammensetzungen erheblich verbessert wird, zeigt sich bei alleiniger Verwendung des Polyurethans B eine weitere Verbesserung des Steinschlag-Kennwertes.

### Beispiele

### 1 Herstellung eines hochmolekularen Polyurethans

132 g Adipinsäure, 72 g Isophthalsäure, 142 g 1,6-Hexandiol und 42 g Neopentylglykol wurden in einem 1L-Glasrundkolben vorgelegt und unter Abdestillieren des Reaktionswassers langsam auf 250 °C erhitzt. Bei dieser Temperatur wurde so lange gehalten, bis die Säurezahl unter 10 mg/g lag. Dann wurde unter vermindertem Druck weiterkondensiert, bis die Säurezahl unter 2 mg/g lag. Man erhielt einen klaren Polyester mit einer Hydroxylzahl von ca. 77 mg/g. 213 g dieses Polyesters, 26,8 g Dimethylolpropionsäure und 10,4 g Neopentylglykol wurden zusammen in 65,3 g N-Methylpyrrolidon bei 100 °C gelöst. Zu dieser Lösung wurden 119,4 g Isophorondiisocyanat gegeben; es wurde bei dieser Temperatur so lange gehalten, bis ein Staudinger-Index ("Grenzviskosität") von 28 bis 30 cm³/g erreicht war. Die Mischung wurde dann auf 95 °C gekühlt, es wurden 10 g Triäthylamin zugegeben und durch Rühren homogenisiert. Diese Lösung wurde anschließend mit 410 g entionisiertem Wasser mit einer Temperatur von ca. 80 °C innerhalb von weniger als 10 min dispergiert und sofort mit einer Lösung aus 3,1 g Äthylendiamin in 73 g entionisiertem Wasser versetzt. Nach einer Homogenisierungsphase von 1 Stunde wurde der Ansatz gekühlt. Man erhielt eine feinteilige Dispersion mit einem Massenanteil an nichtflüchtigen Stoffen von ca. 40 %, einer Viskosität von ca. 2300 mPa·s und einem pH-Wert von ca. 7,6. Die Säurezahl des Harzes betrug ca. 30 mg/g, durch Gelpermeationschromatographie gegen Polystyrol-Standards wurden die zahlenmittlere molare Masse Mₙ zu 20,9 kg/mol und die gewichtsmittlere molare Masse M_{w} zu 41,3 kg/mol bestimmt.

### 2 Herstellung des Polykondensats A

### 2.1 Carboxyfunictionelle Komponente AI

In einem geeigneten Reaktionsgefäß wurde eine Lösung von 810 g (6 mol) Dimethylolpropionsäure in 946 g Diäthylenglykoldimethyläther (DGM) und 526 g Methylisobutylketon (MIBK) vorgelegt. Innerhalb von 4 Stunden wurde zu dieser Lösung bei 100 °C eine Mischung aus 870 g (5 mol) TDI (kommerziell erhältliches Isomerengemisch von 2,4- und 2,6- Toluylendiisocyanat) und 528 g (2 mol) eines mit Äthylenglykolmonoäthyläther halbblockierten TDI zugegeben. Sobald alle NCO-Gruppen umgesetzt waren, wurde der Ansatz mit einer Mischung aus DGM und MIBK (2:1) auf einen Festkörper-Massenanteil von 60 % verdünnt. Die Komponente A1 wies eine Säurezahl von 140 mg/g und einen Staudinger-Index *J*₀ ("Grenzviskositätszahl"), gemessen in N,N-Dimethylformamid (DMF) bei 20 °C, von 9,3 cm³/g auf. Das halbblockierte TDI wurde durch Zugabe von 90 g (1 mol) Äthylenglykolmonoäthyläther zu 174 g (1 mol) TDI innerhalb von 2 Stunden bei 30 °C und anschließender Reaktion bis zu einem Massenanteil an NCO-Gruppen von 16 bis 17 % hergestellt.

### 2.2 Hydroxyfunktionelle Komponente AII

In einem geeigneten Reaktionsgefäß wurden 130 g (1,1 mol) Hexandiol-1,6, 82 g (0,6 mol) Monopentaerythrit, 8 g (0,05 mol) Isononansäure, 28 g (0,1 mol) Ricinenfettsäure (dehydratisierte Rizinusölfettsäure) und 50 g (0,3 mol) Isophthalsäure bei 210 °C bis zu einer Säurezahl von weniger als 4 mg/g verestert. Die Viskosität einer 50 %igen Lösung in Äthylenglykolmonobutyläther, gemessen als Auslaufzeit nach DIN 53211 bei 20°C, beträgt 125 Sekunden, der Staudinger-Index *J*₀ ("Grenzviskositätszahl"), gemessen in N,N-Dimethylformamid bei 20 °C, betrug 9,8 cm³/g.

### 2.3 Polykondensat A

35 Teile der Komponente AI und 65 Teile der Komponente AII wurden gemischt und bei 150 bis 160 °C kondensiert, bis die Säurezahl des Kondensats in der Reaktionsmischung 41 bis 45 mg/g betrug. Der Staudinger-Index des Reaktionsprodukts wurde zu 16,7 cm³/g bestimmt.

### 3 Formulierung des Polykondensats A als selbsthärtendes Bindemittel

### 3.1 Härter

0,7 mol TDI und 0,3 mol MDI (Bis-(4-isocyanatophenyl)-methan) wurden in 85 g Methylisobutylketon gelöst. Der Mischung wurde unter Rühren bei Raumtemperatur 0,3 mol N,N-Bishydroxyäthyl-2-hydroxyäthylurethan (erhältlich durch Umsetzen von äquimolaren Mengen Äthylencarbonat und Diäthanolamin) zugesetzt, anschließend wurde die Temperatur unter Ausnutzung der auftretenden Exothermie auf 50 °C gesteigert. Nachdem alles gelöst war, hielt man noch eine weitere Stunde bei 50 °C. Innerhalb von einer Stunde wurden dann 1,1 mol 3,5-Dimethylpyrazol zugetropft, dabei stieg die Temperatur durch Exothermie auf 80 °C. Durch zeitweises Kühlen wurde bei dieser Temperatur so lange gehalten, bis keine Isocyanatgruppen mehr nachweisbar waren. Das Methylisobutylketon wurde anschließend unter vermindertem Druck abdestilliert, dann wurde der Ansatz mit Methoxypropanol auf einen Festkörper-Massenanteil von 60 bis 70 % verdünnt.

### 3.2 selbsthärtendes Bindemittel

Zur Herstellung des selbsthärtenden Bindemittels wurde das Polykondensat A aus Beispiel 2.3 bei 70 bis 100 °C mit Dimethyläthanolamin auf einen Neutralisationsgrad von 100 % eingestellt und anschließend mit deionisiertem Wasser auf eine Lieferformviskosität von etwa 100 mPa s verdünnt. Unter gutem Rühren wurde dann der Härter aus Beispiel 3.1 langsam zugegeben, nach beendeter Zugabe wurde noch 5 min nachgerührt. Das Verhältnis der Massen von Kondensat A und Härter wurde auf 70:30 (bezogen jeweils auf Festharz) eingestellt.

### 4 Prüfung der erfindungsgemäßen Bindemittel als Automobilfüller

Die Füller 1 bis 4 wurden gemäß den Angaben in der Tabelle 1 formuliert. Dabei sind die Massen der eingesetzten Stoffe in g angegeben.

**Tabelle 1**

| | Füller 1 | Füller 2 | Füller 3 | Füller 4 |
|---|---|---|---|---|
| Polyurethan **B** aus Beispiel 1 | 105,0 | 25,5 | 51,0 | - |
| selbsthärtendes Bindemittel aus Beispiel 3.2 | - | 100,6 | 94,3 | 105,0 |
| Netzmittel (®Surfynol 104 E) * | 1,2 | 1,2 | 1,2 | 1,2 |
| entionisiertes Wasser | 28,5 | 27 | 27,5 | 25,0 |
| Titandioxid (®Kronos 2190) | 60,0 | 52,0 | 53,0 | 51,0 |
| Füllstoff (Bariumsulfat; mittlere Teilchengröße | 60,0 | 52,0 | 53,0 | 51,0 |
| Polyurethan **B** aus Beispiel 1 | 150,0 | - | - | - |
| selbsthärtendes Bindemittel aus Beispiel 3.2 | - | 118,0 | 100,0 | 138,0 |
| Hexamethoxymethylmelamin + | 18,0 | 1,8 | 3,6 | - |

| | | | | |
|---|---|---|---|---|
| +: Hexamethoxymethylmelamin mit einem Festkörper-Massenanteil von 96 bis 100 % | | | | |
| *: 2,4,7,9-Tetramethyl-5-decin-4,7-diol, gelöst in Glykol (50 cg in 1 g der Lösung) | | | | |

Der Füller 4 (nicht mit dem hochmolekularen Polyurethan B modifiziert) diente dabei als Vergleich.

Die Füller wurden mittels einer 150 µm-Rakel auf gereinigte Glasplatten appliziert und nach 15 Minuten Ablüften ("Flash-off") während 25 Minuten bei 165 °C eingebrannt. Dabei ergab sich in allen Fällen eine Trockenfilmstärke von 35 µm. Die Beschichtungen wurden (nach 1 Stunde Lagerung nach dem Einbrennen) auf ihre Pendelhärte und den Glanz untersucht, die Gleichmäßigkeit und Fehlerfreiheit der Lackoberfläche wurde durch Sichtprüfung beurteilt.

Zur Prüfung des Steinschlag-Kennwertes wurden die Füller mit einer Druckluftpistole auf ein mit einer kathodisch abgeschiedenen Elektrotauchgrundierung (ca. 25 µm, Einbrennen bei 175 °C, 30 min) beschichtetes, zinkphosphatiertes Stahlblech (Bonder 26 60 OC) appliziert. Die Härtung der Füller erfolgte im Umluftofen, 20 Minuten bei 165 °C. In allen Fällen wurde eine Trockenfilmstärke von 35 ± 2 µm erreicht. Auf die Füllerschicht wurde ein handelsüblicher mit Melaminharz gehärteter Acrylharz-Automobildecklack aufgebracht, welcher 30 Minuten bei 140 °C gehärtet wurde (Trockenfilm 40 ± 2 µm). Die Bleche wurden nach dem Einbrennen ca. 1 Stunde bei Normklima gelagert. Die Beständigkeitseigenschaften der Filme (Lösungsmittel-, Wasserfestigkeit) sowie die mechanischen Werte entsprachen bei allen Beschichtungen den Praxisanforderungen. Die Steinschlagfestigkeit wurde mit einem Steinschlag-Prüfgerät (Fa. Erichsen, Modell 508) bei + 20 °C mit zweimaligem Beschuß mit jeweils 0,5 kg Stahlschrot (kantig, 4 bis 5 mm mittlerer Durchmesser, Beschuß mit Druckluft 0,2 MPa (2 bar)) gemäß der Norm VDA 621-427 geprüft. Die erhaltenen Beschußbilder wurden in der normgerechten Weise bewertet. Die Prüfergebnisse sind in der folgenden Tabelle 2 zusammengefaßt.

**Tabelle 2**

| | Füller 1 | Füller 2 | Füller 3 | Füller 4 (Vergl.) |
|---|---|---|---|---|
| Aussehen | störungsfrei | störungsfrei | störungsfrei | störungsfrei |
| Pendelhärte* in s | 70 | 95 | 90 | 98 |
| Glanz + | 70 | 80 | 75 | 85 |
| Steinschlag-Kennwert | 0 bis 1 | 1 bis 2 | 1 | 2 bis 3 |

| | | | | |
|---|---|---|---|---|
| *: Pendelhärte nach König (DIN 53 157) | | | | |
| +: Der Glanz wurde an den Glasplatten gemäß der DIN 67 530 bei einem Winkel von 60° bestimmt. | | | | |

### Ergebnis:

Im Vergleich zu einem Füller gemäß dem aktuellen Stand der Technik (Füller 4) zeigt sich eine deutliche Verbesserung des Steinschlag-kennwerts bei Zusatz von hochmolekularem Polyurethan zu einem solchen Füller. Besonders drastisch ist die Verbesserung beim Steinschlag-Test, wenn das Polyurethan als Alleinbindemittel in Kombination mit einem geeigneten Härter eingesetzt wird.

## Patentansprüche

1. Beschichtungsmittel, enthaltend
- ein Kondensationsprodukt A aus einem Carboxylgruppen aufweisenden Harz A1 und einem Hydroxylgruppen aufweisenden Harz A2,
- ein wasserlösliches oder wasserdispergierbares hochmolekulares Polyurethan B mit einer zahlenmittleren molaren Masse Mₙ (gemessen durch Gelpermeationschromatographie, Eichung mit Polystyrol-Standards) von mindestens 10 kg/mol und einer gewichtsmittleren molaren Masse M_{w} von mindestens 20 kg/mol, und einer Säurezahl von 20 mg/g bis 50 mg/g, und
- einen erst bei erhöhter Temperatur von mindestens 80 °C wirksam werdenden Härter C.

2. Beschichtungsmittel nach Anspruch 1, **dadurch gekennzeichnet, daß** der Härter **C** eine Mischung eines blockierten Isocyanats C1 und eines wasserverdünnbaren Aminoplastharzes **C2** ist.

3. Beschichtungsmittel nach Anspruch 2, **dadurch gekennzeichnet, daß** der Massenanteil des Polyurethans **B** 2 bis 30 %; der Massenanteil des Härters **C2** 0,3 bis 6 %, und die Summe der Massenanteile des Kondensationsprodukts **A** und des Härters **C1** 64 bis 97,7 % beträgt.

4. Beschichtungsmittel zur Formulierung von Automobilfüllerlacken, enthaltend
- ein wasserlösliches oder wasserdispergierbares hochmolekulares Polyurethan **B** mit einer zahlenmittleren molaren Masse Mₙ (gemessen durch Gelpermeationschromatographie, Eichung mit Polystyrol-Standards) von mindestens 10 kg/mol und einer gewichtsmittleren molaren Masse M_{w} von mindestens 20 kg/mol und
- einen erst bei erhöhter Temperatur von mindestens 80 °C wirksam werdenden Härter **C**, **dadurch gekennzeichnet, daß** der Massenanteil des Polyurethans **B** in dem Bindemittel des Beschichtungsmittels mindestens 80 % beträgt, und daß der Härter ein wasserlösliches oder in Wasser dispergierbares Aminoplastharz **C2** ist.

5. Beschichtungsmittel nach Anspruch 4, **dadurch gekennzeichnet, daß** das Aminoplastharz **C2** ein vollveräthertes oder teilveräthertes Melarninharz ist.

6. Verfahren zur Herstellung eines Beschichtungsmittels nach Anspruch 1, **dadurch gekennzeichnet, daß** ein Kondensationsprodukt A mit einem hochmolekulares Polyurethan **B** und einem Härter **C** gemischt wird.

7. Verfahren zur Herstellung eines Beschichtungsmittels nach Anspruch 6, **dadurch gekennzeichnet, daß** ein Kondensationsprodukt **A** mit einem blockierten Isocyanat **C1** als Härter gemischt wird, und zu dieser Mischung ein hochmolekulares Polyurethan **B** und ein wasserverdünnbares Aminoplastharz **C2** zugesetzt werden.

8. Verfahren nach Anspruch 6 oder 7, **dadurch gekennzeichnet, daß** das Kondensationsprodukt A durch Umsetzung eines Carboxylgruppen aufweisenden Harzes **A1** und eines Hydroxylgruppen aufweisenden Harzes **A2** unter Kondensationsbedingungen bei einer Temperatur von 80 bis 180 °C hergestellt wird, wobei die Umsetzung solange geführt wird, bis die Kondensationsprodukte einen Säurezahl von ca. 25 bis ca. 75 mg/g und einen Staudinger-Index von ca. 13,m5 bis ca. 18 cm³/g aufweisen, gemessen in Dimethylformamid als Lösungsmittel bei 20 °C.

9. Verfahren nach Anspruch 6 oder 7, **dadurch gekennzeichnet, daß** das Polyurethan **B** durch Umsetzen von Polyisocyanaten **BA** mit Polyolen **BB** mit einer zahlenmittleren molaren Masse Mₙ von mindestens 400 g/mol, gegebenenfalls niedermolekularen Polyolen **BC** und Verbindungen **BD,** die mindestens zwei gegenüber Isocyanatgruppen reaktive Gruppen und mindestens eine zur Anionenbildung befähigte Gruppe aufweisen, zu einem frei NCO-Gruppen enthaltenden Präpolymeren, das einen Staudinger-Index von mindestens 15 cm³/g aufweist, zumindest teilweise Neutralisation der zur Anionenbildung befähigten Gruppe der Verbindung **BD** unter Bildung von anionischen Gruppe, Dispergierung dieses Präpolymeren in Wasser und Umsetzung des neutralisierten Präpolymeren mit mindestens einer Komponente ausgewählt aus niedermolekularen Polyolen **BE,** die keine weiteren gegenüber Isocyanatgruppen reaktiven Gruppen tragen, wobei diese Verbindungen im Überschuß eingesetzt werden, Verbindungen **BF,** die gegenüber Isocyanaten monofunktionell sind oder aktiven Wasserstoff unterschiedlicher Reaktivität enthalten und von den Verbindungen **BE** unterschiedlich sind, sowie Verbindungen **BG,** die von **BB, BC, BD, BE** und **BF** verschieden sind und mindestens zwei mit Isocyanatgruppen reaktive Gruppen enthalten.

10. Verwendung eines Beschichtungsmittels gemäß einem der vorhergehenden Ansprüche als Füllerlack für die Automobillackierung.

## Claims

1. A coating composition comprising
- a condensation product **A** of a carboxyl-containing resin **A1** and a hydroxyl-containing resin **A2,**
- a water-soluble or water-dispersible, high molecular mass polyurethane **B** having a number-average molar mass Mₙ (measured by gel permeation chromatography, calibration with polystyrene standards) of at least 10 kg/mol and a weight-average molar mass M_{w} of at least 20 kg/mol, and an acid number of from 20 to 50 mg/g, and
- a curing agent **C** which becomes active only at an elevated temperature of at least 80°C.

2. The coating composition as claimed in claim 1, wherein the curing agent **C** is a mixture of a blocked isocyanate **C1** and a water-dilutable amino resin **C2.**

3. The coating composition as claimed in claim 2, wherein the mass fraction of the polyurethane **B** is from 2 to 30%; the mass fraction of the curing agent **C2** is from 0.3 to 6%; and the sum of the mass fractions of the condensation product **A** and the curing agent **C1** is from 64 to 97.7%.

4. A coating composition for formulating automotive surfacer materials, comprising
- a water-soluble or water-dispersible, high molecular mass polyurethane **B** having a number-average molar mass Mₙ (measured by gel permeation chromatography, calibration with polystyrene standards) of at least 10 kg/mol and a weight-average molar mass M_{w} of at least 20 kg/mol, and
- a curing agent **C** which becomes active only at an elevated temperature of at least 80°C, wherein the mass fraction of the polyurethane **B** in the binder of the coating composition is at least 80% and wherein the curing agent is a water-soluble or water-dispersible amino resin **C2.**

5. The coating composition as claimed in claim 4, wherein the amino resin **C2** is a fully etherified or partly etherified melamine resin.

6. A process for preparing a coating composition as claimed in claim 1, which comprises mixing a condensation product **A** with a high molecular mass polyurethane **B** and a curing agent **C.**

7. A process for preparing a coating composition as claimed in claim 6, which comprises mixing a condensation product **A** with a blocked isocyanate **C1** as curing agent, and adding a high molecular mass polyurethane **B** and a water-dilutable amino resin **C2** to this mixture.

8. The process as claimed in claim 6 or 7, wherein the condensation product **A** is prepared by reacting a carboxyl-containing resin **A1** and a hydroxyl-containing resin **A2** under condensation conditions at a temperature of from 80 to 180°C, the reaction being conducted until the condensation products have an acid number of from about 25 to about 75 mg/g and a Staudinger Index of from about 13.m5 to about 18 cm³/g, measured in dimethylformamide as solvent at 20°C.

9. The process as claimed in claim 6 or 7, wherein the polyurethane **B** is prepared by reacting polyisocyanates **BA** with polyols **BB** having a number-average molar mass Mₙ of at least 400 g/mol, low molecular mass polyols **BC,** if desired, and compounds **BD** which have at least two groups which are reactive toward isocyanate groups and at least one group which is capable of forming anions, to give a prepolymer which contains free NCO groups and has a Staudinger Index of at least 15 cm³/g, at least partly neutralizing the group capable of forming anions in the compound **BD** to form anionic groups, dispersing this prepolymer in water, and reacting the neutralized prepolymer with at least one component selected from low molecular mass polyols **BE,** which carry no further reactive groups relative to isocyanate groups, these compounds being used in excess, compounds **BF,** which are monofunctional toward isocyanates or contain active hydrogen of different reactivity and are different from the compounds **BE,** and also compounds **BG,** which are different from **BB, BC, BD, BE** and **BF** and contain at least two groups which are reactive with isocyanate groups.

10. The use of a coating composition as claimed in any of the preceding claims as a surfacer material for automotive finishing.

## Revendications

1. Agent de revêtement, contenant
- un produit de condensation A d'une résine A1, comportant des groupes carboxyle, et d'une résine A2, comportant des groupes hydroxyle,
- un polyuréthanne B, de poids moléculaire élevé, soluble dans l'eau ou dispersible dans l'eau, avec une masse molaire moyenne en nombre Mₙ (mesurée par chromatographie de perméation sur gel, étalonnage avec des polystyrènes standard) d'au moins 10 kg/mole et une masse molaire moyenne en poids M_{w} d'au moins 20 kg/mole, et un indice d'acide allant de 20 mg/g à 50 mg/g, et
- un durcisseur C efficace qu'à température élevée d'au moins 80°C.

2. Agent de revêtement selon la revendication 1, **caractérisé en ce que** le durcisseur C est un mélange d'un isocyanate bloqué C1 et d'une résine aminoplaste diluable dans l'eau C2.

3. Agent de revêtement selon la revendication 2, **caractérisé en ce que** la proportion massique du polyuréthanne B se situe dans l'intervalle allant de 2 à 30% ; la proportion massique du durcisseur C2 se situe dans l'intervalle allant de 0,3 à 6% ; et la somme de la proportion massique du produit de condensation A et du durcisseur C1 se situe dans l'intervalle allant de 64 à 97,7%.

4. Agent de revêtement pour la formulation de peintures de remplissage pour automobile, contenant
- un polyuréthanne B, de poids moléculaire élevé, soluble dans l'eau ou dispersible dans l'eau, avec une masse molaire moyenne en nombre Mₙ (mesurée par chromatographie de perméation sur gel, étalonnage avec des polystyrènes standard) d'au moins 10 kg/mole et une masse molaire moyenne en poids M_{w} d'au moins 20 kg/mole, et
- un durcisseur C efficace qu'à température élevée d'au moins 80°C, **caractérisé en ce que** la proportion massique du polyuréthanne B dans le liant de l'agent de revêtement s'élève à au moins 80%, et **en ce que** le durcisseur est une résine aminoplaste C2, soluble dans l'eau ou dispersible dans l'eau.

5. Agent de revêtement selon la revendication 4, **caractérisé en ce que** la résine aminoplaste C2 est une résine mélamine complètement éthérifiée ou partiellement éthérifiée.

6. Procédé de préparation d'un agent de revêtement selon la revendication 1, **caractérisé en ce que** l'on mélange un produit de condensation A avec un polyuréthane B, de poids moléculaire élevé et un durcisseur C.

7. Procédé de préparation d'un agent de revêtement selon la revendication 6, **caractérisé en ce que** l'on mélange un produit de condensation A avec un isocyanate bloqué C1 comme durcisseur, et l'on ajoute à ce mélange, un polyuréthane B, de poids moléculaire élevé et une résine aminoplaste C2, diluable dans l'eau.

8. Procédé selon la revendication 6 ou 7, **caractérisé en ce que** le produit de condensation A est préparé par réaction d'une résine A1, comportant des groupes carboxyle, et d'une résine A2, comportant des groupes hydroxyle, dans des conditions de condensation à une température allant de 80 à 180°C, où la réaction est conduite jusqu'à ce que le produit de condensation présente un indice d'acide allant d'environ 25 à environ 75 mg/g et un indice Staudinger d'environ 13,5 à environ 18 cm³/g, mesuré dans le diméthylformamide comme solvant à 20°C.

9. Procédé selon la revendication 6 ou 7, **caractérisé en ce que** le polyuréthanne B est préparé par réaction de polyisocyanates BA avec des polyols BB avec une masse molaire moyenne en nombre Mn d'au moins 400 g/mole, le cas échéant des polyols BC de faible poids moléculaire, et des composés BD, qui présentent au moins deux groupes réactifs avec les groupes isocyanate et au moins un groupe susceptible de former un anion, en un prépolymère contenant des groupes NCO libres, qui présente un indice Staudinger d'au moins 15 cm³/g, neutralisation au moins partielle du groupe susceptible de former un anion du composé BD avec formation d'un groupe anionique, dispersion de ce prépolymère dans l'eau et réaction du prépolymère neutralisé avec au moins un composant choisi parmi les polyols BE de faible poids moléculaire, qui ne comportent pas d'autre groupe réactif avec les groupes isocyanate, où ces composés sont mis à réagir en excès, des composés BF, qui sont monofonctionnels vis-à-vis des isocyanates ou qui contiennent des hydrogènes actifs de réactivités différentes et qui sont différents des composés BE, ainsi que des composés BG, qui sont différents des composés BB, BC, BD, BE et BF et qui contiennent au moins deux groupes réactifs avec les groupes isocyanate.

10. Utilisation d'un agent de revêtement selon l'une quelconque des revendications précédentes comme peinture de remplissage pour la peinture automobile.
